(19) Europäisches Patentamt
European Patent Office
Office européen des brevets

(11) Veröffentlichungsnummer: **0 025 163**
**A2**

(12) # EUROPÄISCHE PATENTANMELDUNG

(21) Anmeldenummer: **80105049.3**

(22) Anmeldetag: **26.08.80**

(51) Int. Cl.³: **C 12 H 1/04**

(30) Priorität: **07.09.79 DE 2936122**

(43) Veröffentlichungstag der Anmeldung:
**18.03.81 Patentblatt 81/11**

(84) Benannte Vertragsstaaten:
**AT CH DE FR IT LI**

(71) Anmelder: **HOECHST AKTIENGESELLSCHAFT**
**Zentrale Patentabteilung Postfach 80 03 20**
**D-6230 Frankfurt/Main 80(DE)**

(72) Erfinder: **Keller, Reinhold, Dr.**
**Wiesenweg 5**
**D-6232 Bad Soden am Taunus(DE)**

(72) Erfinder: **Arpe, Hans-Jürgen, Dr.**
**de-Ridder-Weg 10**
**S-6230 Frankfurt am Main 80(DE)**

(72) Erfinder: **Erckel, Rüdiger, Dr.**
**Staufenstrasse 16**
**D-6239 Eppstein/Taunus(DE)**

(72) Erfinder: **von Rymon Lipinski, G. W., Dr.**
**Hörselbergstrasse 5**
**D-6230 Frankfurt am Main 80(DE)**

(54) **Verfahren zur Verminderung des Schwefeldioxid-Bedarfs von Wein.**

(57) Der $SO_2$-Bedarf von Wein wird dadurch vermindert, daß man Wein unmittelbar nach abgeschlossener Gärung mit basischen Ionenaustauschern in der Sulfitform behandelt. Vorzugsweise wird hierfür eine Ionenaustauschermenge mit einem dem Gehalt des Weins an Acetaldehyd molmäßig etwa gleichen Gehalt an Sulfitionen verwendet.

Die Weinqualität wird durch die Behandlung nicht beeinträchtigt.

EP 0 025 163 A2

Croydon Printing Company Ltd.

Verfahren zur Verminderung des $SO_2$-Bedarfs von Wein

Wein ist bekanntlich - wenn keine besonderen Maßnahmen getroffen werden - ziemlich anfällig gegen mikrobielle und oxidative Veränderungen, welche seine Qualität herabsetzen und ihn u.U. sogar bald ungenießbar machen können. Zwecks Verhinderung dieser Veränderungen setzt man dem Wein daher schon seit Jahrhunderten Schwefeldioxid $SO_2$ zu, das sowohl antibakteriell als auch antioxidativ wirkt und schließlich auch Verbindungen abbindet, welche sich in freier Form geschmacklich negativ bemerkmar machen könnten.

Eine Verbindung, welche in unbehandeltem Wein normalerweise in merklicher Menge vorhanden ist und welche bei Luftzutritt in Abwesenheit von $SO_2$ ziemlich schnell weiter oxidiert wird und welche sowohl in nicht weiter oxidiertem als auch in weiter oxidiertem Zustand geschmacklich unerwünscht ist, ist u.a. und insbesondere Acetaldehyd $CH_3CHO$. Mit $SO_2$ geht Acetaldehyd in Gegenwart von Wasser eine recht stabile Verbindung (Ethanolsulfonsäure) ein:

$$CH_3CHO + SO_2 + 2\ H_2O \longrightarrow CH_3 - CH(OH)SO_3^{\ominus} + H_3O^{\oplus}$$

Die Ethanolsulfonsäure und ggf. auch andere saure Reaktionsprodukte des $SO_2$ mit im Wein vorhandenen Ketoverbindungen können mit Hilfe von basischen Ionenaustauschern aus dem Wein entfernt werden (H. Michel, Dissertation Universität Gießen 1978). Als basische Ionenaustauscher dienen vernetzte Polymerisationsharze insbesondere auf Polystyrol-Divinylbenzol-Basis und auf Acrylsäurebasis mit basischen Ankergruppen (Trimethylammonium- oder Dimethyl-hydroxyethyl-ammoniumgruppen etc.). Ein derartiger basischer Austauscher ist z.B. das im Handel unter der Bezeichnung ®Permutit W (The Permutit Comp., New York/USA) befindliche Produkt. Für den Einsatz zur Entfernung von

BAD ORIGINAL

Ethanolsulfonsäure und gegebenenfalls anderen Säuren aus Wein werden die Austauscher mit Anionen beladen, die auch im Wein vorkommen (Tartrat, Malat- etc. Ionen), so daß beim Austausch der Anionen dann praktisch keine artfremden Ionen in den Wein gelangen. Eine qualitative - insbesondere geschmackliche - Beeinträchtigung des Weins soll durch diese Austauscherbehandlung nicht oder praktisch nicht erfolgen.

Infolge der Entfernung der Ethanolsulfonsäure (und ggf. andererer sulfonsaurer Verbindungen) wird in dem so behandelten Wein zwar der Gehalt an "gebundenem $SO_2$" erniedrigt; nicht erniedrigt wird jedoch der Gesamt-$SO_2$-Bedarf des Weins, wenngleich dies aus der genannten Dissertation von H. Michel nicht immer deutlich genug zum Ausdruck kommt. An der Gesamtmenge des zur Ausschaltung schädlicher Bakterien und zur Verhinderung unerwünschter Oxidationen sowie zur Bindung geschmacklich ungünstiger Stoffe nötigen $SO_2$ ändert sich durch die Entfernung der Ethanolsulfonsäure und ggf. anderer $SO_2$-Reaktionsprodukte aus dem Wein nämlich nichts.

Da in neuerer Zeit gegen die Verwendung von $SO_2$ als Konservierungsstoff für Nahrungsmittel aus toxikologischen Gründen immer stärkere Bedenken erhoben und auch entsprechende gesetzliche Bestimmungen erlassen wurden, hat es nicht an Versuchen gefehlt, für den Wein - Ausbau möglichst überhaupt kein $SO_2$ mehr zu verwenden. So wird etwa nach dem in der DE-OS 2 540 155 beschriebenen Verfahren Wein aus Traubenmost dadurch hergestellt, daß ohne Zusatz von $SO_2$ oder schwefliger Säure nach dem Vergären des Mostes mittels der im Wein vorhandenen Hefe ein biologischer Säureabbau eingeleitet wird und daß erst nach dessen Beendigung der Wein von der Hefe abgetrennt wird. Nach diesem Verfahren hergestellte Weine konnten aber in einem Vergleich mit herkömmlich (mittels $SO_2$) ausgebauten Weinen nicht bestehen /Weinwirtschaft 114 (28/29), 792 bis 793 (1978)/, weil die ohne $SO_2$ ausgebauten Weine

sich ziemlich schnell oxidativ nachteilig veränderten. Ein auch über einen längeren Zeitraum geschmacklich einwandfreier Wein läßt sich so (ohne Zusatz von $SO_2$) also nicht herstellen.

Wenn die Herstellung eines gut haltbaren Weins ohne Zusatz von $SO_2$ (oder anderen, ggf. noch ungünstigeren Konservierungsmitteln) somit kaum möglich erscheint, muß aufgrund der immer strenger werdenden Anforderungen und lebensmittelrechtlichen Vorschriften über die Verwendung von Chemikalien im Nahrungsmittelbereich versucht werden, für den Weinausbau jedenfalls mit möglichst wenig $SO_2$ auszukommen.

Es bestand daher die Aufgabe, eine Möglichkeit zur Verminderung des $SO_2$-Bedarfs von Wein zu finden, wobei aber die Qualität und die Haltbarkeit des Weins in keiner Weise negativ beeinträchtigt werden dürfen.

Diese Aufgabe konnte erfindungsgemäß dadurch gelöst werden, daß man Wein unmittelbar nach abgeschlossener Gärung mit basischen Ionenaustauschern in der Sulfitform behandelt.

Als basische Ionenaustauscher können praktisch alle basischen Austauscher auf Basis von Polykondensations- und Polymerisationsharzen, die unter den im Wein vorliegenden Bedingungen chemisch beständig sind, zum Einsatz kommen.

Vorteilhaft ist jedoch die Verwendung der nach der Dissertation von H. Michel zur Entfernung von Ethansulfonsäure geeigneten Polymerisationsharze auf Basis Polystyrol und Acrylsäure, die in geeigneter Weise insbesondere mit Divinylbenzol als Brückenbildner vernetzt sind.

BAD ORIGINAL

Die Harze können auch die gleichen Ankergruppen wie die in der Disseration von Michel beschriebenen Harze besitzen, also insbesondere Trimethyl-ammonium- und Dimethylhydroxyethyl-ammoniumgruppen. Selbstverständlich sind andere basischen Ankergruppen nicht ausgeschlossen.

Für das erfindungsgemäße Verfahren geeignete basische Ionenaustauscher der vorstehend genannten Art sind z.B. unter den Namen (R)Permutit (The Permutit Comp./USA), (R)Lewatit (Bayer AG), (R)Amberlite (Rohm & Haas Comp./USA), (R)Dowex (The Dow Chemical Comp./USA) etc. im Handel.
Für den Einsatz beim Verfahren der Erfindung müssen diese basischen Ionenaustauscher in die Sulfitform überführt werden. Dies kann in bekannter Weise z.B. durch Überführung in die $OH^-$-Form mittels wäßrigem Alkali und anschliessende Umsetzung mit Alkali- oder Erdalkalisulfiten sowie Neutralwaschen mit Wasser geschehen.

Wenn die Ankergruppen in den Austauschern Trimethylammoniumgruppen sind, liegt in der Sulfitform im wesentlichen folgende Struktur vor:

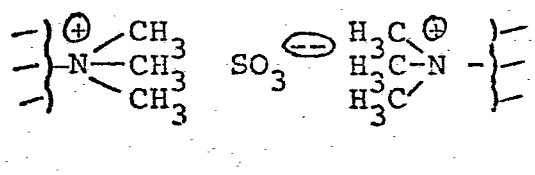

Diese basischen Ionenaustauscher in der Sulfitform binden den im Wein vorhandenen Acetaldehyd (als Ethansulfonsäure), ohne daß vom Austauscher Tartrat, Malat- etc. Ionen wie nach den gemäß der Dissertation von Michel verwendeten entsprechend beladenen Austauschern in den Wein abgegeben werden. Der im erfindungsgemäßen Fall im Wein an der Austauscheroberfläche stattfindende Vorgang läßt sich etwa wie folgt verdeutlichen:

BAD ORIGINAL

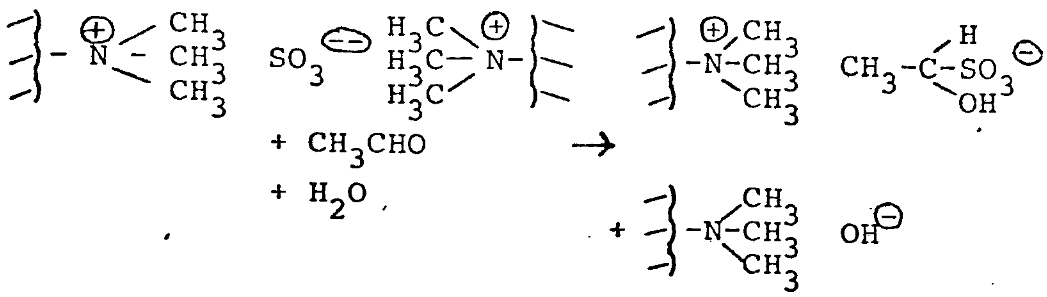

Dadurch daß auf diese Weise dem Wein der darin enthaltene Acetaldehyd (und in geringerem Umfang auch andere Carbonylverbindungen) entzogen wird bzw. werden, wird der Gesamt-$SO_2$-Bedarf des Weines beträchtlich vermindert. Diese Art der Verminderung des $SO_2$-Bedarfs wurde durch den einschlägigen Stand der Technik in keiner Weise nahegelegt; denn die in der Dissertation von Michel beschriebene Methode zielt überhaupt nicht auf eine Verminderung des $SO_2$-Bedarfs von Wein ab, sondern dient lediglich der Entfernung des aus dem zugeführten $SO_2$ und dem im Wein vorhandenen Acetaldehyd gebildeten Produktes (Ethansulfonsäure) durch bloßen Ionenaustausch am entsprechenden basischen Ionenaustauscher, ohne daß dort eine chemische Reaktion (wie im erfindungsgemäßen Fall) stattfindet, und etwa beim Verfahren gemäß DE-OS 25 40 155 kommt überhaupt kein $SO_2$ und kein Ionenaustauscher vor, so daß ein näherer Vergleich mit der Erfindung hier nicht möglich ist.

Die Menge des beim erfindungsgemäßen Verfahren zum Einsatz kommenden basischen Ionenaustauschers in der Sulfitform hängt in erster Linie von dessen Kapazität und dem Gehalt des vergorenen Mosts an Acetaldehyd ab. Wie aus dem vorstehenden Schema des bei der Erfindung stattfindenen Vorgangs ersichtlich ist, ist es vorteilhaft und zweckmäßig, für die Weinbehandlung eine Ionenaustauschermenge mit einem dem Gehalt des Weins an Acetaldehyd molmäßig etwa gleichen Gehalt an Sulfitionen zu verwenden. Der Gehalt des Weins an Acetaldehyd und des Ionenaustauschers an Sulfitionen wird durch bekannte Methoden vorher bestimmt.

Es ist auch problemlos möglich, einen Überschuß an Austauscher an der Sulfitform einzusetzen; dabei wird das überschüssige Sulfit von im Wein vorhandenen Anionen wie z.B. Tartrat, Malat etc. weitgehend verdrängt. Das freigesetzte Sulfit schadet nicht, weil dann bei der nachfolgenden Schwefelung des Weins entsprechend weniger $SO_2$ verwendet werden muß.

Weiterhin kann auch mit einem Unterschuß an Austauscher in der Sulfitform gearbeitet werden; dabei wird dann etwa die dem Sulfitgehalt des Austauschers entsprechende Menge Acetaldehyd aus dem vergorenen Most entfernt. Bei der nachfolgenden Schwefelung des Weins ist dann jedoch wieder etwas mehr $SO_2$ nötig. Da das erfindungsgemäße Verfahren gerade der Verminderung des $SO_2$-Bedarfs von Wein dient, sollte also möglichst nicht weniger Austauscher in der Sulfitform eingesetzt werden als zur Bindung des vorhandenen Acetaldehyds erforderlich ist.

Die erfindungsgemäße Weinbehandlung kann in einem Temperaturbereich zwischen etwa 0 und 70°C, vorzugsweise zwischen etwa 0 und 40°C erfolgen; besonders bevorzugt erfolgt sie bei Temperaturen zwischen etwa 5 und 25°C.

Weiterhin ist die Behandlung sowohl im batch als auch im Säulenverfahren möglich. Im Batch-Verfahren wird der Austauscher in der Sulfitform zweckmäßig in feuchter Form in den vergorenen Most eingetragen und gleichmäßig mit diesem verrührt. Da die Adduktbildung der Sulfitionen mit dem Acetaldehyd ziemlich schnell vonstatten geht, werden die zu entfernenden Carbonylverbindungen, insbesondere der zu entfernende Acetaldehyd, schnell vom Austau-

BAD ORIGINAL

scherharz gebunden, so daß die Behandlung im allgemeinen bereits dann beendet werden kann, wenn das Austauscherharz einmal gleichmäßig in den vergorenen Most eingemischt war. Im Säulenverfahren genügt im allgemeinen bei üblichen Säulengrößen ein einmaliger Durchlauf des Mosts.

Als erforderliche Behandlungszeiten können Zeiten zwischen etwa 0,25 und 24 Stunden angegeben werden, wobei im allgemeinen Zeiten bis zu etwa 4 Stunden ausreichen. Längere Behandlungszeiten - auch länger als 24 Stunden - sind möglich, bringen aber keine Vorteile.

Nach der Behandlung wird der vergorene Most vom Ionenaustauscher in bekannter Weise wie z.B. durch Filtrieren, Dekantieren, Zentrifugieren etc., abgetrennt. Der Austauscher kann dann - ebenfalls in bekannter Weise - wieder in die Sulfitform zum weiteren Einsatz für das erfindungsgemäße Verfahren überführt werden.

Durch das erfindungsgemäße Verfahren wird der $SO_2$-Bedarf von Wein jedenfalls um den Anteil vermindert, der normalerweise zur Bindung des im Wein vorhandenen Acetaldehyds notwendig ist. Eine Qualitäts-, insbesondere geschmackliche Beeinträchtigung des Weins erfolgt dabei nicht oder jedenfalls kaum in merklichem Ausmaß, wie dies auch bei Verwendung prinzipiell der gleichen basischen Austauscher, nur ohne die Sulfitbelegung, auch von H. Michel in dessen Dissertation aus dem Jahr 1978 festgestellt wurde. Deswegen und wegen der einfachen und problemlosen Durchführbarkeit stellt die Erfindung einen erheblichen Fortschritt dar.

Die Erfindung wird nun durch die folgenden Beispiele näher erläutert.

BAD ORIGINAL

Die Beispiele 1 - 12 wurden aus einem mit einer wäßrigen Lösung aus Acetaldehyd, Weinsäure und NaOH bestehenden Modesslein durchgeführt, weil sich damit die erfindungsgemäße Behandlung analytisch einfacher verfolgen läßt. Danach folgt noch ein Beispiel mit natürlichem Wein.

Die bei den Beispielen angewandten Ionenaustauscher und Bestimmungsmethoden waren:

Ionenaustauscher:

Es wurden folgende handelsübliche basische Ionenaustauscher verwendet:

(R)Amberlite IRA-400 (Rohm & Haas Comp./USA)
(R)Lewatit M-600 (Bayer AG)
(R)Permutit ESB-274 (The Permutit Comp./USA)
(R)Permutit Es-26 (The Permutit Comp./USA)
(R)Permutit ESB-32 (The Permutit Comp./USA)
Ionenaustauscher Merck III (Merck AG)
Art. 4767

Diese Ionenaustauscher sind versetzte Polystyrolharze mit quartären Ammoniumgruppen als Angergruppen.

Überführung in die Sulfit-Form

50 g Ionenaustauscher werden in eine Säule gegeben uns zur Überführung zunächst in die OH-Form mit 250 ml 2n-NaOh behandelt (Tropfgeschwindigkeit: 500 ml/h). Man wäscht solange mit dest. Wasser nach, bis im Waschwasser kein Sulfit mehr nachweisbar ist (keine Entfärbung von Jod/Stärke-Lösung). Der so behandelte Ionenaustauscher wird mit dest. Wasser aus der Säue gespült und über eine Nutsche filtriert.

BAD ORIGINAL

Bestimmung der Sulfit-Kapazität:

Zur Kapazitätsbestimmung wird 1 g des feuchten Ionenaustauschers abgewogen, mit 50 ml 2n-$H_2SO_4$ versetzt und nach 15 minütigem Rühren in geschlossenem Gefäß bei Raumtemperatur mit $^n/10$-$KI_3$-Lösung titriert.

Tabelle 1 zeigt die Kapazität der mit Sulfit beladenen vorstehend genannten Ionenaustauscher.

Tabelle 1

| Ionenaustauscher (Sulfitform) | Kapazität /mmol/g7 |
|---|---|
| (R)Amberlite IRA-400 | 0,39 |
| (R)Lewatit M-600 | 0,45 |
| (R)Permutit ESB-274 | 0,28 |
| (R)Permutit ES-26 | 0,35 |
| (R)Permutit ESB-32 | 0,24 |
| Ionenaustauscher Merck III Art. 4767 | 0,40 |

In wäßriger Lösung durchgeführte Bestimmungen:

a) Acetaldehyd:
Die Bestimmung des Acetaldehyds in wäßriger Lösung erfolgt gaschromatographisch /0,5 m Glassäule mit 4 mm innerer Durchmesser, gefüllt mit Porapack (Firma Waters/USA) QS 100 - 120 mesh7.

b) Sulfit:
Die Sulfit-Bestimmung erfolgt durch Titration mit n/10-$KJ_3$-Lösung und Stärke als Indikator.

c) Ethanolsulfonsäure:

Deren Bestimmung erfolgt durch ca. 15 minütiges Alkalisieren mit verdünnter NaOH auf pH ≈ 12, stehenlassen der Lösung ca. 15 Minuten bei Raumtemperatur, anzuwenden auf pH etwa 2 - 4 mit verdünnter $H_2SO_4$ und Titration des freigesetzten Sulfits mit $KJ_3$-Lösung und Stärke als Indikator.

Zusammensetzung des für die Beispiele verwendeten Modellweins:

123 mg Acetaldehyd
10,0 g Weinsäure
1,33 g NaOH
1 l dest. Wasser

Beispiele:

Es wurden 200 ml (enthaltend 0,56 mmol Acetaldehyd) Modellwein bei Raumtemperatur mit 1,0 g (Beispiele 1 bis 6) und 3,0 g (Beispiele 7 bis 12) Ionenaustauscher in der Sulfitform versetzt und 24 h gerührt. Zur gaschromatographischen Bestimmung von Acetaldehyd wurden jeweils 0,3 ml Lösung entnommen. Die Bestimmung des freien Sulfits und der Ethanolsulfonsäure erfolgte nach Abfiltration vom Ionenaustauscher. Die Ergebnisse der Beispiele sind in den nachstehenden Tabellen 2,(Beispiele 1 bis 6) und 3 (Beispiele 7 bis 12) wiedergegeben.

BAD ORIGINAL

Tabelle 2

| Beispiel | Ionenaustauscher (Sulfitform) | Kapazität [mmol/g] | Acetaldehyd eingesetzt [mmol] | Acetaldehyd gefunden [mmol] | Acetaldehyd gebunden [mmol] | feies $HSO_3^-$ [mmol] | freie Ethanolsulfonsäure [mmol] |
|---|---|---|---|---|---|---|---|
| 1 | (R) Amberlite IRA-400 | 0,39 | 0,56 | 0,18 | 0,38 | 0,008 | - |
| 2 | (R) Lewatit M-600 | 0,45 | 0,56 | 0,14 | 0,42 | 0,01 | - |
| 3 | (R) Permutit ESB-274 | 0,28 | 0,56 | 0,30 | 0,26 | 0,01 | - |
| 4 | (R) Permutit ESB-32 | 0,24 | 0,56 | 0,34 | 0,22 | 0,01 | - |
| 5 | (R) Permutit ES-26 | 0,34 | 0,56 | 0,23 | 0,33 | 0,01 | - |
| 6 | Ionenaustauscher Merck III Art. 4767 | 0,40 | 0,56 | 0,19 | 0,37 | 0,01 | - |

Tabelle 3

| Bei-spiel | Ionen-austauscher (Sulfitform) | Gesamt-menge $SO_3$ [mmol] | Acetaldehyd | | | feies $HSO_3^-$ [mmol] | freie Ethanolsulfonsäure [mmol] |
|---|---|---|---|---|---|---|---|
| | | | ein-gesetzt [mmol] | ge-funden [mmol] | ge-bunden [mmol] | | |
| 7 | 'IRA-400 | 1,17 | 0,56 | - | 0,56 | 0,60 | - |
| 8 | 'M-600 | 1,35 | 0,56 | - | 0,56 | 0,75 | - |
| 9 | 'ESB-274 | 0,84 | 0,56 | - | 0,56 | 0,28 | - |
| 10 | 'ESB-32 | 0,72 | 0,56 | - | 0,56 | 0,15 | - |
| 11 | 'ES-26 | 1,02 | 0,56 | - | 0,56 | 0,45 | - |
| 12 | 'Merck III Art. 4767 | 1,20 | 0,56 | - | 0,56 | 0,62 | - |

Beispiel mit natürlichem Wein

Für dieses Beispiel mit natürlichem Wein wurde ein vergorener unbehandelter Most verwendet. Der Acetaldehydgehalt dieses Mostes betrug nach gaschromatographischer Messung 163 ppm. Als Ionenaustauscher wurde "(R) Lewatit M 600" mit einer Beladung von 0,6 mmol $SO_2$ /g eingesetzt.

Nach Behandlung des Weines mit dem Ionenaustausch (6,5 g Ionenaustauscher/1 l Wein) wurde eine Restmenge an Aldehyd von 62 ppm festegestellt.

Patentansprüche:

1. Verfahren zur Verminderung des $SO_2$-Bedarfs von Wein, dadurch gekennzeichnet, daß man Wein unmittelbar nach abgeschlossener Gärung mit basischen Ionenaustauschern in der Sulfitform behandelt.

2. Verfahren nach Anspruch 1, dadurch gekennzeichnet, daß man für die Weinbehandlung eine Ionenaustauschermenge mit einem dem Gehalt des Weins an Acetaldehyd molmäßig etwa gleichen Gehalt an Sulfitionen verwendet.

3. Verfahren nach den Ansprüchen 1 bis 2, dadurch gekennzeichnet, daß man die Weinbehandlung in einem Temperaturbereich von etwa 5 bis 25°C durchführt.

BAD ORIGINAL